(19) **Europäisches Patentamt European Patent Office Office européen des brevets**

(11) **EP 4 579 442 A1**

(12) **EUROPEAN PATENT APPLICATION**

(43) Date of publication:
**02.07.2025 Bulletin 2025/27**

(21) Application number: **24223349.2**

(22) Date of filing: **27.12.2024**

(51) International Patent Classification (IPC):
**G06F 8/70** *(2018.01)* **G06F 8/76** *(2018.01)*

(52) Cooperative Patent Classification (CPC):
**G06F 8/70; G06F 8/76**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.01.2024 IN 202421000057**

(71) Applicant: **Tata Consultancy Services Limited Maharashtra (IN)**

(72) Inventors:
- **VIDHANI, KUMAR MANSUKHLAL 382009 Gandhinagar, Gujarat (IN)**

- **Alasingara Bhattachar, RAJAN Mindigal 560066 Bangalore, Karnataka (IN)**
- **SINGH DILIP THAKUR, MEENA 560009 Bangalore, Karnataka (IN)**
- **SYED, HABEEB BASHA 500001 Hyderabad, Telangana (IN)**
- **SINHA, SANKET ACHAL 411057 Pune, Maharashtra (IN)**
- **LODHA, SACHIN PREMSUKH 411057 Pune, Maharashtra (IN)**

(74) Representative: **Goddar, Heinz J. Boehmert & Boehmert Anwaltspartnerschaft mbB Pettenkoferstrasse 22 80336 München (DE)**

(54) **METHOD AND SYSTEM FOR A DYNAMIC GENERATION OF RULES**

(57)    Quantum computers pose significant threat to modern day cryptography. To mitigate this risk, migration of enterprise applications to a quantum safe state is needed. Crypto inventory, an automatic process to discover all crypto application programming interfaces usage in an enterprise application, is a first problem to be addressed in the migration journey. Embodiments of the present disclosure provide a method and system for a dynamic generation of rules. An input program statement includes an unseen crypto application programming interface (API) is received which represents a method invocation. The invoked method is mapped by the input program statement with a rules database to infer and generate new rules for an unseen crypto application programming interface (API) belonging to (a) a same library by a weighted distance approach, (b) a library implementing known contracts by a graph traversal approach, and (c) a library implementing unknown contracts by a pattern matching approach respectively.

FIG. 2

**EP 4 579 442 A1**

**Description**

CROSS-REFERENCE TO RELATED APPLICATIONS AND PRIORITY

The present application claims priority to Indian application no. 202421000057, filed on January 01, 2024.

TECHNICAL FIELD

The disclosure herein generally relates to a rule management, and, more particularly, to a method and system for a dynamic generation of rules.

BACKGROUND

Quantum computers pose significant threat to modern day cryptography. To mitigate this risk, it is necessary to migrate enterprise applications to a quantum safe state. Crypto inventory, an automatic process to discover all crypto application programming interfaces (APIs) usage in an enterprise application, is a first problem to be addressed in the migration journey. A rule-based approach can be a useful tool in addressing the crypto inventory problem in the absence of huge amount of enterprise grade applications required for training a machine learning (ML) solution. The precision and coverage of any rule-based solution relies on the completeness of rules repository. It is time consuming and error prone to manually go through all crypto APIs and encode them as rules for a programming language supported crypto library (e.g., JCA), third party libraries (e.g., BouncyCastle - https://www.bouncycastle.org/), and library implementing custom crypto logic for crypto primitives such as hash, encryption, etc.

Existing literature outlines solutions which allow automatic inference of patterns/rules. These inferences are required for the code migration and automatic patch generation problems. However, these solutions assume a pair of source repositories or the availability of source code of multiple patches depending on the problem being addressed. For example, the APIs mapping solution for the code migration problem uses an edit distance approach to learn nearest matching equivalent API in the target language. This approach can be used to infer a new rule for an API for overloaded methods belonging to a language-based library which is an integral part of the language (e.g., JAVA®, Python®). However, this approach does not work for APIs which belong to third party libraries which implements same contracts as the language based library. Developers of the third party libraries implementing the logic for a crypto primitive (e.g., hash, signature, encryption, decryption) are free to choose different signatures (method names and their arguments) for APIs as opposed to language based library. Moreover, the solution fails for an application which has different implementation of the same crypto primitive.

SUMMARY

Embodiments of the present disclosure present technological improvements as solutions to one or more of the above-mentioned technical problems recognized by the inventors in conventional systems. For example, in one embodiment, a method of dynamically generating one or more new rules is provided. The processor implemented method includes: receiving, via one or more hardware processors, an input program statement comprising an unseen crypto application programming interface (API); determining, via the one or more hardware processors, whether the input program statement represents a method invocation; mapping, via the one or more hardware processors, the invoked method by the input program statement with a rules database to infer one or more new rules for an unseen crypto application programming interface (API) belonging to at least one of (a) a same library, (b) a library implementing known contracts, and (c) a library implementing unknown contracts; and generating, via the one or more hardware processors, at least one new rule for the unseen crypto application programming interface (API) belonging to (a) the same library by a weighted distance approach, (b) the library implementing known contracts by a graph traversal approach, and (c) the library implementing unknown contracts by a pattern matching approach respectively.

In an embodiment, the one or more new rules is generated, if the invoked method is not present in the rules database, but belongs to a same class as one of the rules, by: (a) fetching, via the one or more hardware processors, a class to which the method belongs, by using a weighted distance component; (b) computing, via the one or more hardware processors, a distance between the crypto application programming interface (API) and the rules database, (c) computing, via the one or more hardware processors, a final score by weighing each computed distance as per weightage assigned. In an embodiment, the distance is computed with respect to (i) a name of the method, (ii) one or more associated arguments count, (iii) a type of argument, and (iv) an order of the arguments associated with rules. In an embodiment, the final score is applied with a predefined threshold value to filter matching at least one rule; and (d) generating, via the one or more hardware processors, at least one new rule for the input API along with severity based on a least distance. In an embodiment, the one or more new rules is generated, if the invoked method that is not present in the rules database, and belongs to a class other than one of the rules in the rules database, but the invoked method is part of a known interface or contract, by: (a) constructing, via the one or more hardware processors, a graph comprising one or more nodes representing (i) one or more abstract classes, (ii) one or more interfaces, and (iii) one or more methods; and (b) generating, via the one or more hardware processors, at least one new rule based on a directed path being identified from a root node to a leaf representing a public method. In an embodiment, the one or more nodes includes one or more root nodes, one or more leaves of the graph. In an embodiment, one or more leaves of the graph represents one or more public methods which are exposed to a host application. In an embodiment, the one or more root nodes of the graph are at least one of: (i) the one or more interfaces, or (ii) one or more abstract classes which do not extend other class. In an embodiment, all non-root nodes except leaf nodes of the graph are at least one of (a) one or more concrete classes, (b) one or more classes which extend other classes, and (c) one or more classes which implement the one or more interfaces. In an embodiment, the one or more new rules is generated, based on one or more patterns of an implementation, if the invoked method is not present in the rules database, and if the invoked method belongs to a class other than one of the rules database, and the invoked method is not part of the known interface or the contract, by: (a) extracting, via the one or more hardware processors, the one or more patterns of implementation from a textual document which specifies the method; (b) mapping, via the one or more hardware processors, the one or more extracted patterns with a codebase to identify methods implementing the one or more extracted patterns; (c) performing, via the one or more hardware processors, a bottom up traversal in a call graph of an application or library from the one or more extracted patterns implementing methods to determine a common method which is exposed to the host application implementing all patterns related to a crypto primitive; and (d) marking, via the one or more hardware processors, the common method to generate at least one new rule.

In another aspect, there is provided a system for dynamically generating one or more new rules. The system includes a memory storing instructions; one or more communication interfaces; and one or more hardware processors coupled to the memory via the one or more communication interfaces, wherein the one or more hardware processors are configured by the instructions to: receive, an input program statement comprising an unseen crypto application programming interface (API); determine, whether the input program statement represents a method invocation; map, the invoked method by the input program statement with a rules database to infer one or more new rules for an unseen crypto application programming interface (API) belonging to at least one of (a) a same library, (b) a library implementing known contracts, and (c) a library implementing unknown contracts; and generate, at least one new rule for the unseen crypto application programming interface (API) belonging to (a) the same library by a weighted distance approach, (b) the library implementing known contracts by a graph traversal approach, and (c) the library implementing unknown contracts by a pattern matching approach respectively.

In an embodiment, the one or more new rules is generated, if the invoked method is not present in the rules database, but belongs to a same class as one of the rules, by: (a) fetching, a class to which the method belongs, by using a weighted distance component; (b) computing, a distance between the crypto application programming interface (API) and the rules database, (c) computing, a final score by weighing each computed distance as per weightage assigned. In an embodiment, the distance is computed with respect to (i) a name of the method, (ii) one or more associated arguments count, (iii) a type of argument, and (iv) an order of the arguments associated with rules. In an embodiment, the final score is applied with a predefined threshold value to filter matching at least one rule; and (d) generating, at least one new rule for the input API along with severity based on a least distance. In an embodiment, the one or more new rules is generated, if the invoked method that is not present in the rules database, and belongs to a class other than one of the rules in the rules database, but the invoked method is part of a known interface or contract, by: (a) constructing, a graph comprising one or more nodes representing (i) one or more abstract classes, (ii) one or more interfaces, and (iii) one or more methods; and (b) generating, at least one new rule based on a directed path being identified from a root node to a leaf representing a public method. In an embodiment, the one or more nodes includes one or more root nodes, one or more leaves of the graph. In an embodiment, one or more leaves of the graph represents one or more public methods which are exposed to a host application. In an embodiment, the one or more root nodes of the graph are at least one of: (i) the one or more interfaces, or (ii) one or more abstract classes which do not extend other class. In an embodiment, all non-root nodes except leaf nodes of the graph are at least one of (a) one or more concrete classes, (b) one or more classes which extend other classes, and (c) one or more classes which implement the one or more interfaces. In an embodiment, the one or more new rules is generated, based on one or more patterns of an implementation, if the invoked method is not present in the rules database, and if the invoked method belongs to a class other than one of the rules database, and the invoked method is not part of the known interface or the contract, by: (a) extracting, the one or more patterns of implementation from a textual document which specifies the method; (b) mapping, the one or more extracted patterns with a codebase to identify methods implementing the one or more extracted patterns; (c) performing, a bottom up traversal in a call graph of an application or library from the one or more extracted patterns implementing methods to determine a common method which is exposed to the host application implementing all patterns related to a crypto primitive; and (d) marking, the common method to generate at least one new rule.

In yet another aspect, a non-transitory computer readable medium for comprising one or more instructions which when executed by one or more hardware processors causes at least one of: receiving, an input program statement comprising an unseen crypto application programming interface (API); determining, whether the input program statement represents a method invocation; mapping, the invoked method by the input program statement with a rules database to infer one or more new rules for an unseen crypto application programming interface (API) belonging to at least one of (a) a same library, (b) a library implementing known contracts, and (c) a library implementing unknown contracts; and generating, at least one new rule for the unseen crypto application programming interface (API) belonging to (a) the same library by a weighted distance approach, (b) the library implementing known contracts by a graph traversal approach, and (c) the library implementing unknown contracts by a pattern matching approach respectively.

In an embodiment, the one or more new rules is generated, if the invoked method is not present in the rules database, but belongs to a same class as one of the rules, by: (a) fetching, a class to which the method belongs, by using a weighted distance component; (b) computing, a distance between the crypto application programming interface (API) and the rules database, (c) computing, a final score by weighing each computed distance as per weightage assigned. In an embodiment, the distance is computed with respect to (i) a name of the method, (ii) one or more associated arguments count, (iii) a type of argument, and (iv) an order of the arguments associated with rules. In an embodiment, the final score is applied with a predefined threshold value to filter matching at least one rule; and (d) generating, at least one new rule for the input API along with severity based on a least distance. In an embodiment, the one or more new rules is generated, if the invoked method that is not present in the rules database, and belongs to a class other than one of the rules in the rules database, but the invoked method is part of a known interface or contract, by: (a) constructing, a graph comprising one or more nodes representing (i) one or more abstract classes, (ii) one or more interfaces, and (iii) one or more methods; and (b) generating, at least one new rule based on a directed path being identified from a root node to a leaf representing a public method. In an embodiment, the one or more nodes includes one or more root nodes, one or more leaves of the graph. In an embodiment, one or more leaves of the graph represents one or more public methods which are exposed to a host application. In an embodiment, the one or more root nodes of the graph are at least one of: (i) the one or more interfaces, or (ii) one or more abstract classes which do not extend other class. In an embodiment, all non-root nodes except leaf nodes of the graph are at least one of (a) one or more concrete classes, (b) one or more classes which extend other classes, and (c) one or more classes which implement the one or more interfaces. In an embodiment, the one or more new rules is generated, based on one or more patterns of an implementation, if the invoked method is not present in the rules database, and if the invoked method belongs to a class other than one of the rules database, and the invoked method is not part of the known interface or the contract, by: (a) extracting, the one or more patterns of implementation from a textual document which specifies the method; (b) mapping, the one or more extracted patterns with a codebase to identify methods implementing the one or more extracted patterns; (c) performing, a bottom up traversal in a call graph of an application or library from the one or more extracted patterns implementing methods to determine a common method which is exposed to the host application implementing all patterns related to a crypto primitive; and (d) marking, the common method to generate at least one new rule.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a system for dynamic generation of one or more new rules, according to an embodiment of the present disclosure.

FIG. 2 is an exemplary functional block diagram of the system of FIG. 1 for dynamic generation of the one or more new rules, according to an embodiment of the present disclosure.

FIG. 3A and FIG. 3B are exemplary flow diagrams illustrating a method of dynamically generating the one or more new rules for an unseen crypto application programming interfaces (APIs) by a weighted distance approach, according to an embodiment of the present disclosure.

FIG. 4 is an exemplary graphical representation illustrating a graph for a library following one or more standard programming language interfaces, according to an embodiment of the present disclosure.

FIG. 5 is an exemplary flow diagram illustrating the method of dynamically generating the one or more new rules for the unseen crypto API based on a pattern matching approach, according to an embodiment of the present disclosure.

FIG. 6 is an exemplary flow diagram illustrating a method of detecting a message-digest algorithm (MD5) logic, according to an embodiment of the present disclosure.

FIG. 7 is an exemplary flow diagram illustrating the method of dynamically generating the one or more new rules, according to an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

There is a need for an approach to infer a rule dynamically for an unseen crypto application programming interface (API) to make a crypto inventory solution more precise and complete. Embodiments of the present disclosure provides a method and system for dynamic generation of rules. The embodiments of the present disclosure provide an automatic rule generation (ARG) tool to dynamically generate one or more new rules if not present in a rules database. The automatic rule generation (ARG) tool is configured to ensemble of three approaches to handle corresponding three scenarios i.e., inferring one or more new rules for the unseen crypto application programming interface (API) belonging to: (a) a same library by a weighted distance approach, (b) a library implementing known contracts by a graph traversal approach, and (c) a library implementing unknown contracts by a pattern matching approach respectively. A method invocation calls a method defined for a class of a reference variable. The method invocation is utilized for methods of user classes, system classes, and external classes.

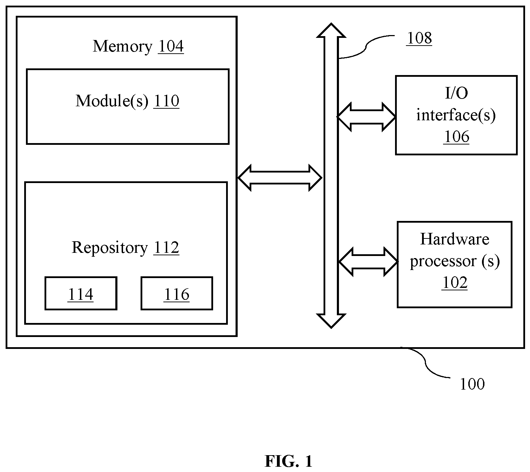

Referring now to the drawings, and more particularly to FIGS. 1 through 7, where similar reference characters denote corresponding features consistently throughout the figures, there are shown preferred embodiments, and these embodiments are described in the context of the following exemplary system and/or method.

FIG. 1 illustrates a system 100 for dynamic generation of one or more new rules, according to an embodiment of the present disclosure. In an embodiment, the system 100 includes one or more processor(s) 102, communication interface device(s) or input/output (I/O) interface(s) 106, and one or more data storage devices or memory 104 operatively coupled to the one or more processors 102. The memory 104 includes a database. The one or more processor(s) processor 102, the memory 104, and the I/O interface(s) 106 may be coupled by a system bus such as a bus 108 or a similar mechanism. The one or more processor(s) 102 that are hardware processors can be implemented as one or more microprocessors, microcomputers, microcontrollers, digital signal processors, central processing units, state machines, logic circuitries, and/or any devices that manipulate signals based on operational instructions. Among other capabilities, the one or more processor(s) 102 is configured to fetch and execute computer-readable instructions stored in the memory 104. In an embodiment, the system 100 can be implemented in a variety of computing systems, such as laptop computers, notebooks, hand-held devices, workstations, mainframe computers, servers, a network cloud, and the like.

The I/O interface device(s) 106 can include a variety of software and hardware interfaces, for example, a web interface, a graphical user interface, and the like. The I/O interface device(s) 106 may include a variety of software and hardware interfaces, for example, interfaces for peripheral device(s), such as a keyboard, a mouse, an external memory, a camera device, and a printer. Further, the I/O interface device(s) 106 may enable the system 100 to communicate with other devices, such as web servers and external databases. The I/O interface device(s) 106 can facilitate multiple communications within a wide variety of networks and protocol types, including wired networks, for example, local area network (LAN), cable, etc., and wireless networks, such as Wireless LAN (WLAN), cellular, or satellite. In an embodiment, the I/O interface device(s) 106 can include one or more ports for connecting number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 110 and a repository 112 for storing data processed, received, and generated by the plurality of modules 110. The plurality of modules 110 may include routines, programs, objects, components, data structures, and so on, which perform particular tasks or implement particular abstract data types.

Further, the database stores information pertaining to inputs fed to the system 100 and/or outputs generated by the system (e.g., data/output generated at each stage of the data processing) 100, specific to the methodology described herein. More specifically, the database stores information being processed at each step of the proposed methodology.

Additionally, the plurality of modules 110 may include programs or coded instructions that supplement applications and functions of the system 100. The repository 112, amongst other things, includes a system database 114 and other data 116. The other data 116 may include data generated as a result of the execution of one or more modules in the plurality of modules 110. Herein, the memory for example the memory 104 and the computer program code configured to, with the hardware processor for example the processor 102, causes the system 100 to perform various functions described herein under.

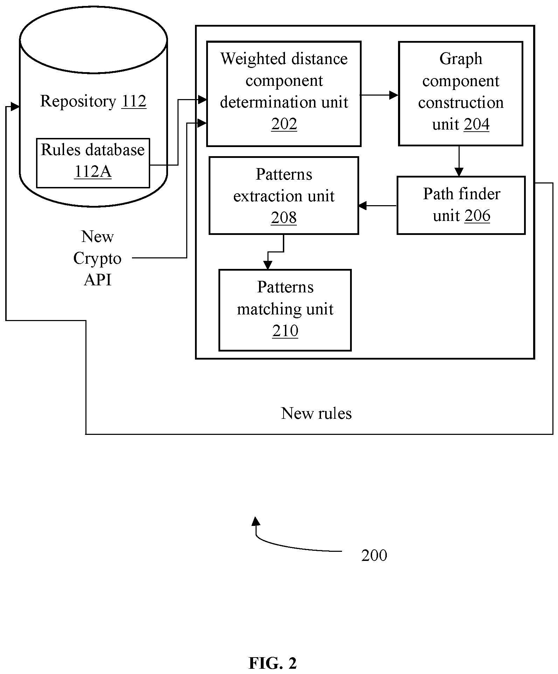

FIG. 2 is an exemplary functional block diagram of the system 100 of FIG. 1 for dynamic generation of the one or more new rules, according to an embodiment of the present disclosure. A system 200 may be an example of the system 100 (FIG. 1). In an example embodiment, the system 200 may be embodied in, or is in direct communication with the system, for example the system 100 (FIG. 1). The system 200 correspond to an automatic rule generation (ARG) tool 200. The automatic rule generation (ARG) tool 200 receives an input program statement which includes an unseen crypto application programming interface (API). In an embodiment, whether the input program statement represents a method invocation is determined. The automatic rule generation (ARG) tool 200 maps the invoked method by the input program statement with a rules database 112A to infer the one or more new rules for the unseen crypto application programming interface (API) belonging to (a) the same library, (b) the library implementing the known contracts, and (c) the library implementing the unknown contracts. The automatic rule generation (ARG) tool 200 ensembles three approaches to generate the one or more new rules for the unseen crypto application programming interface (API) belonging to: (a) the same library by the weighted distance approach, (b) the library implementing known contracts by the graph traversal approach, and (c) the library implementing unknown contracts by the pattern matching approach respectively. The library corresponds to collection of classes or collection of modules. The automatic rule generation (ARG) tool 200 includes one or more components i.e., the repository 112, a weighted distance component determination unit 202, a graph component construction unit 204, a path finder unit 206, a patterns extraction unit 208, and a patterns matching unit 210. The repository 112 includes the rules database 112A.

The automatic rule generation (ARG) tool 200 enables the weighted distance component determination unit 202 to compute a distance between the crypto application programming interface (API), and one or more rules in the rules database 112A. The automatic rule generation (ARG) tool 200 identifies if the invoked method is not present in the rules database 112A, but belongs to a same class (e.g., a program entity) as one of the rules then, one or more new rules are generated by the weighted edit distance approach. The distance between the one or more rules denoted as a 'rule' subscript and the crypto API of the input program statement denoted as 'program' is calculated, are as follows:

$$Distance_{final} = W_{name} \times Distance_{name} + W_{argcount} \times Distance_{argcount} + W_{argtype} \times Distance_{argtype} + W_{argorder} \times Distance_{argorder} \quad (1)$$

$$W_{name} + W_{argcount} + W_{argtype} + W_{argorder} = 1 \quad (2)$$

$$Distance_{name} = Levenshtein(methodName_{rule}, methodName_{program}) \quad (3)$$

where calculating a Levenshtein distance between a method name as given in the rule and a method name of the crypto API for the input program statement.

$$Distance_{argcount} = |argcount_{rule} - argcount_{program}| \quad (4)$$

$$Distance_{argtype} = \frac{\sum_{i=1}^{argcombinations} \frac{\sum_{i=1}^{minarg} Penalty(argtype_{rule}, argtype_{program})}{minarg}}{argcombinations} \quad (5)$$

where minarg$\neq$ 0, argcombinations $\neq$ 0.

minarg = minimum value of arguments count of rule method and program method.
maxarg = maximum value of arguments count of rule method and program method.

$$Penalty(argtype_{rule}, argtype_{program}) = 0 \; if \; argtype_{rule} == argtype_{program}, otherwise \; 1$$

$$argcombinations = \binom{max}{min}$$

$$Distance_{argorder} = \frac{\sum_{i=0}^{minarg} Diff(argorder_{rule}^{i}, argorder_{program}^{k})}{minarg}, minarg \neq 0 \quad (6)$$

Where $argorder_{rule}^{i}$ position of i$^{th}$ argument of rule method, $argorder_{program}^{k}$ position of matching argument of program method with rule method,

Diff - a difference value between two arguments position.

The ARG tool 200 generates the one or more new rules for the method based on a nearest matching rule of the rules database 112A.

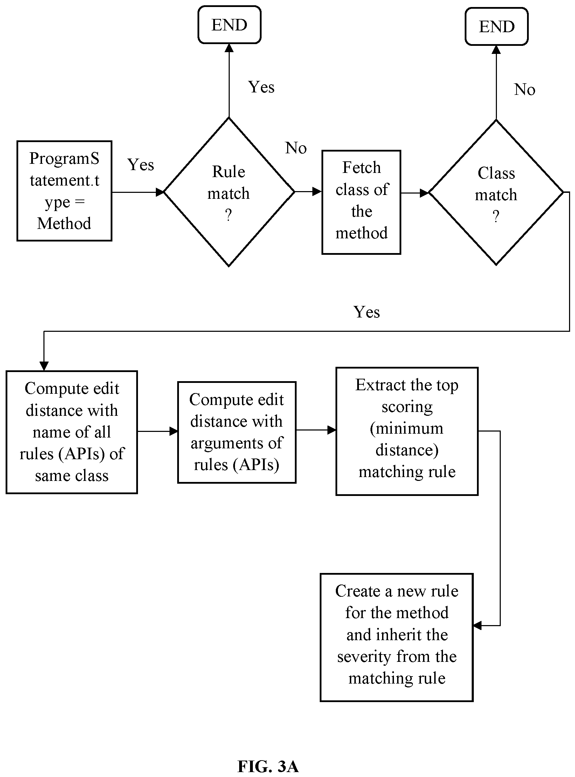

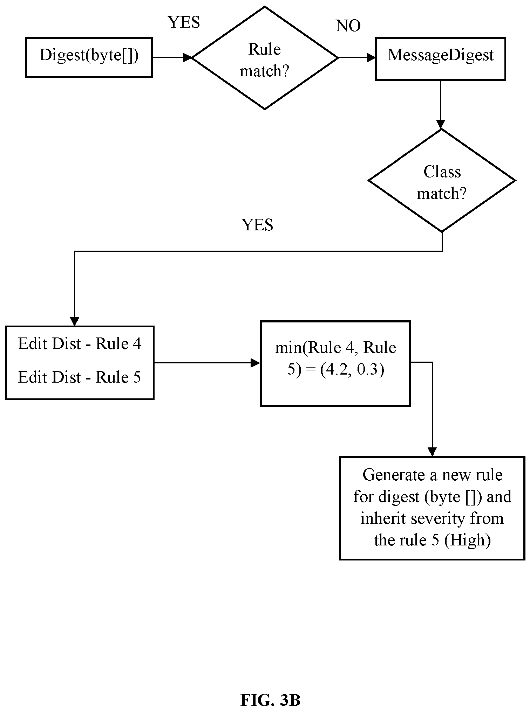

FIG. 3A and FIG. 3B are exemplary flow diagrams illustrating a method of dynamically generating the one or more new rules for the unseen crypto API by using the weighted distance approach, according to an embodiment of the present disclosure. The automatic rule generation (ARG) tool 200 determines whether an input program statement represents a method invocation and if true then, the automatic rule generation (ARG) tool 200 matches the method invocation against the rules database 112A. If there is a no match then, the weighted distance component determination unit 202 fetches the class to which the method belongs, by using a weighted distance component. Alternatively, if the class is not found in one of the rules database 112A then, the weighted distance component determination unit 202 ignores the method. A distance between the crypto application programming interface (API) and the rules database 112A is computed with respect to: (a) a name of the method (as depicted in equation 3), (ii) one or more associated arguments count (as depicted in equation 4), (iii) a type of argument (as depicted in equation 5), and (iv) an order of the arguments associated with rules (as depicted in equation 6). Each computed distance is then weighed as per weightage assigned to different distances computed and a final score (as depicted in equation 1) is computed, and the final score is applied with a predefined threshold value to filter matching rules. The rule with least distance (i.e., the closest matching) is utilized for inheriting severity to generate the one or more new rules for the input API along with severity.

For example, two functions generateHash and generateHash2 (Not shown in FIGURE) are considered as one or more inputs. If the generateHash2 function is processed as per rules database (i.e., rule 5), then the system 100 identifies digest () method which is a crypto API (i.e., true positive). If a digest(src) method is identified as crypto API at runtime then, a new rule can be generated dynamically, and subsequent occurrences of the same API are detected to enhance coverage and precision of the automatic rule generation (ARG) tool 200. The automatic rule generation (ARG) tool 200 marks the digest(src) as the crypto API and includes as part of the rules database 112A, by using the weighted distance based approach.

The weighted distance approach is implemented when an input API shares the class with one of classes in the rules database 112A i.e., if rule is missing in an existing language based API. However, a third party API is not bound to having a class name which corresponds to the repository 112 and also API naming convention differs significantly from the existing language based API.

The automatic rule generation (ARG) tool 200 relies on the graph traversal approach to generate the one or more new rules. The automatic rule generation (ARG) tool 200 identifies if the invoked method that is not present in the rules database 112A, and belongs to a class other than one of rules in the rules database 112A, but the invoked method is part of a known interface or contract then, one or more new rules are generated based on existence of a path from one of root nodes to a leaf node in a graph. The graph component construction unit 204 builds the graph which includes one or more steps, are as follows: (a) one or more security packages are extracted from the library using one or more user defined patterns, (b) one or more abstract classes i.e., a class with one or more unimplemented methods, one or more interfaces i.e., a program or software contract with unimplemented methods, and one or more methods are extracted from the one or more security packages, (c) a graph node is created for each extracted class, the interface, and the method, (d) each graph node represented by one or more public methods is marked as leaves, (e) mark corresponding graph node of an abstract class or interface as the root node, if an abstract class or interface does not extend a class or interface respectively or does not have a super class or interface, (f) create an "extends" edge between two nodes of the graph if a class extends another class, (g) create an "implements" edge between two nodes of the graph if a class implements an interface, (h) create an "exposes" edge between two nodes of the graph if a class has implementation of a public method, and (i) create an edge between two any nodes of the graph excluding the leaves. The leaves of the graph represent one or more public methods which are exposed to a host application. In an embodiment, the graph includes one or more nodes includes the root nodes, the leaves. In an embodiment, the graph is built to encode relationships between the classes, the one or more interfaces, and the methods. The root nodes of the graph are either the one or more interfaces or the one or more abstract classes which do not extend other class. All non-root nodes except leaf nodes are one of a concrete classes i.e., a class with all implemented methods, one or more classes which extend other classes, and one or more classes which implement the one or more interfaces. At least one new rule is generated in the rules database 112A if there exists a directed path from the root node to the public method. In an embodiment, the interpretation of the path is as follows: crypto APIs enclosed which are in the contracts (i.e., the one or more interfaces, or the one or more abstract classes), they are exposed to the host application through public methods and hence eligible for rules.

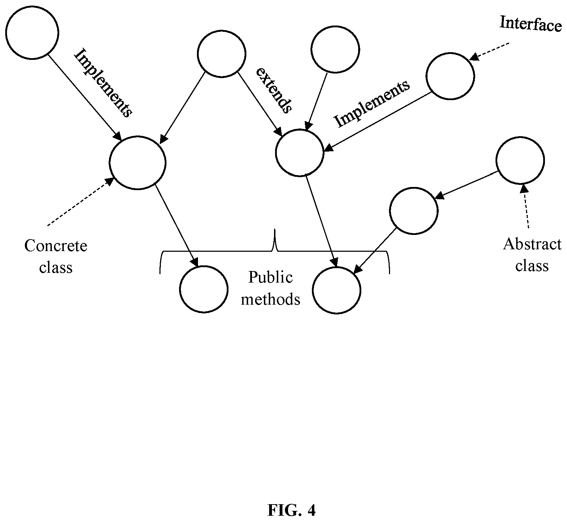

FIG. 4 is an exemplary graphical representation illustrating a graph for a library following one or more standard programming language interfaces, according to an embodiment of the present disclosure. The graph for the library that follows the standard programming language i.e., standard Java interfaces are considered. For example, JDK packages correspond to Java. security, Javax. crypto, Javax. security, Sun. security, Java. crypto. The library can be used by any application for corresponding crypto APIs.

The path finder unit 206 of the automatic rule generation (ARG) tool 200 is configured to find a path using a path enumeration approach in the graph generated by the graph component construction unit 204 to generate the one or more new rules.

The automatic rule generation (ARG) tool 200 identifies if the invoked method is not present in the rules database 112A, and if the invoked method belongs to a class other than one of rules in the rules database 112A, and the invoked method is not part of the known interface or the contract. The patterns extraction unit 208 of the automatic rule generation (ARG) tool 200 extracts one or more patterns of implementation from a textual document which specifies the method. The ARG tool 200 provides a user interface to locate and extract the one or more patterns upon approval from an end user. For example, custom crypto APIs may not follow any standard contract which can be used as a reference to generate rules. The automatic rule generation (ARG) tool 200 implements the pattern based approach to address detection problem pertaining to the custom crypto APIs. The patterns matching unit 210 matches the one or more extracted patterns in a codebase to identify methods implementing the one or more extracted patterns. The methods conforming to the one or more patterns that are extracted and subsequently traced backwards in a call graph of the codebase. The methods which are exposed to outside world (i.e., public methods) are marked as potential candidates for rules generation.

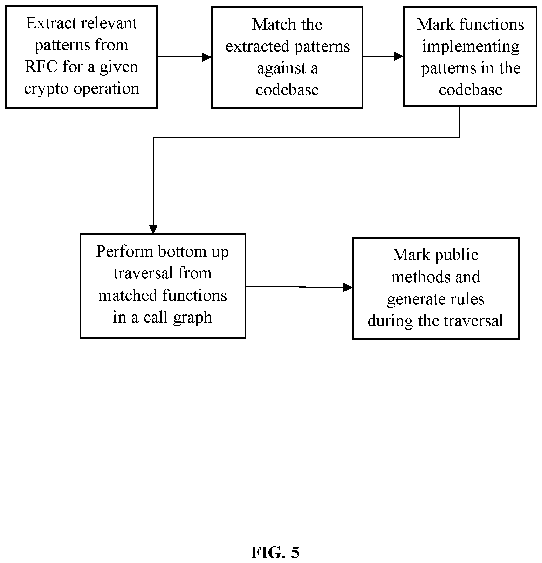

FIG. 5 is an exemplary flow diagram illustrating the method of dynamically generating the one or more new rules for the unseen crypto API based on the pattern matching approach, according to an embodiment of the present disclosure. For example, the ARG tool 200 utilizes a set of hand-coded patterns to extract relevant information from request for comments (RFC) documents related to the crypto primitive (e.g., Hash, signature, encryption, decryption). The RFC documents illustrates how the crypto primitive should be implemented by a software engineer. The ARG tool 200 executes the set of hand-coded patterns against the RFC documents and extract one or more patterns for the crypto primitive. The ARG tool 200 matches the one or more extracted patterns against the codebase to identify methods implementing the one or more extracted patterns. The methods may not qualify for the crypto APIs if methods are not exposed to host application or patterns are scattered across multiple methods. Hence, the ARG tool 200 implements a bottom up traversal in a call graph of an application or library from patterns implementing methods to identify a common method which is exposed to the host application implementing all patterns related to the crypto primitive. The common method is marked for generating the one or more new rules.

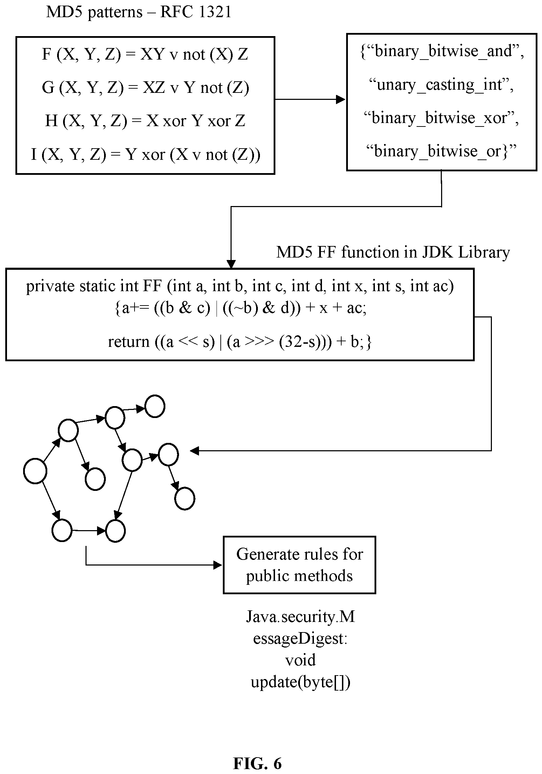

FIG. 6 is an exemplary flow diagram illustrating a method of detecting a message-digest algorithm (MD5) logic, according to an embodiment of the present disclosure. For example, the MD5 logic or a hash value computing primitive is documented in the RFC 1321. The ARG tool 200 extracts relevant fragments from the RFC document and identify methods implementing them in the JDK library, and the methods are FF, GG, HH and II. The methods are used as start methods in the bottom up traversal of the call graph and terminate at a public method update.

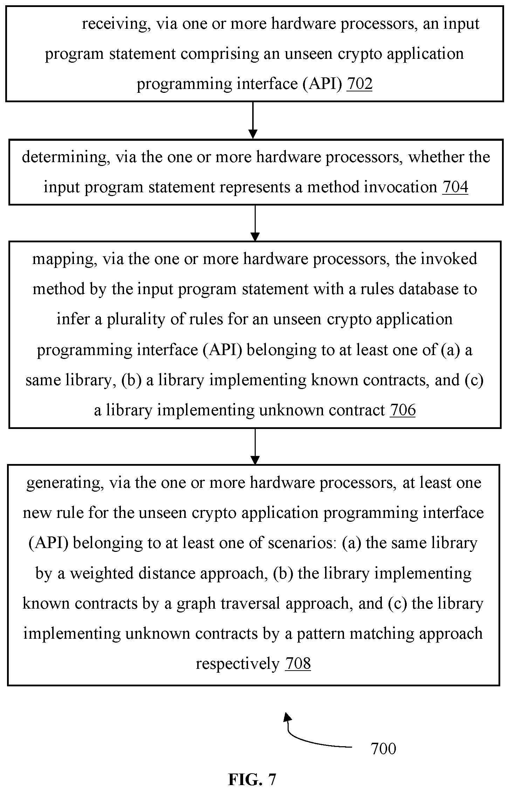

FIG. 7 is an exemplary flow diagram illustrating the method of dynamically generating the one or more new rules, according to an embodiment of the present disclosure. In an embodiment, the system 100 comprises one or more data storage devices or the memory 104 operatively coupled to the one or more hardware processors 102 and is configured to store instructions for execution of steps of the method by the one or more processors 102. The flow diagram depicted is better understood by way of following explanation/description. The steps of the method of the present disclosure will now be explained with reference to the components of the system as depicted in FIG. 1 and FIG. 2.

At step 702, the input program statement including an unseen crypto application programming interface (API) is received. At step 704, whether the input program statement represents a method invocation is determined. At step 706, the invoked method is mapped by the input program statement with the rules database 112A to infer the one or more new rules for an unseen crypto application programming interface (API) belonging to (a) the same library, (b) the library implementing the known contracts, and (c) the library implementing the unknown contracts.

At step 708, one or more new rules are generated for the unseen crypto application programming interface (API) belonging to at least one of: (a) the same library by the weighted distance approach (as described in corresponding description of FIG. 3A and FIG. 3B), (b) the library implementing known contracts by the graph traversal approach, and (c) the library implementing unknown contracts by the pattern matching approach respectively. The one or more new rules is generated, if the invoked method is not present in the rules database 112A, but belongs to the same class as one of the rules. At step 708I-a, the class to which the method belongs is fetched, by using the weighted distance component. At step 708I-b, the distance between the crypto application programming interface (API) and the rules database 112A is computed. At step 708I-c, the final score is computed by weighing each computed distance as per the weightage assigned. In an embodiment, the distance is computed with respect to (i) the name of the method, (ii) the one or more associated arguments count, (iii) the type of argument, and (iv) the order of the arguments associated with the rules. In an embodiment, the final score is applied with a predefined threshold value to filter matching one or more rules. At step 708I-d, the one or more new rules is generated for the input API along with severity based on the least distance.

The one or more new rules is generated, if the invoked method that is not present in the rules database 112A, and belongs to the class other than one of the rules in the rules database 112A, but the invoked method is part of the known interface or the contract. At step 708II-a, the graph is constructed (as described in corresponding description of FIG. 2 and FIG. 4) which includes the one or more nodes representing (i) the one or more abstract classes, (ii) the one or more interfaces, and (iii) the one or more methods. At step 708II-b, one or more new rules is generated based on the directed path being identified from the root node to the public method. In an embodiment, the one or more nodes includes the one or more root nodes, one or more leaves of the graph. In an embodiment, the one or more leaves of the graph represents the one or more public methods which are exposed to the host application.

The one or more root nodes of the graph are (i) the one or more interfaces, or (ii) the one or more abstract classes which do not extend other class. In an embodiment, all non-root nodes except leaf nodes of the graph are (a) the one or more concrete classes, (b) the one or more classes which extend other classes, and (c) the one or more classes which implement the one or more interfaces.

The one or more new rules is generated, based on the one or more patterns of the implementation, if the invoked method is not present in the rules database 112A, and if the invoked method belongs to a class other than one of the rules database 112A, and the invoked method is not part of the known interface or the contract. At step 708III-a, the one or more patterns of implementation (as described in corresponding description of FIG. 2 and FIG. 3B) is extracted from the textual document which specifies the method. At step 708III-b, the one or more extracted patterns are mapped with the codebase to identify methods implementing the one or more extracted patterns. At step 708III-c, the bottom up traversal is performed in the call graph of an application or library from the one or more extracted patterns implementing methods to determine the common method which is exposed to the host application implementing all patterns related to the crypto primitive. At step 708III-d, the common method is marked to generate the one or more new rules.

The embodiments of present disclosure herein address unresolved problem of inferring any unseen crypto API to generate new rules. Embodiments of present disclosure herein thus provide the automatic rule generation (ARG) tool to dynamically generate the one or more new rules. Moreover, the embodiments herein further infer any unseen crypto API belonging to (a) the same library, (b) the library implementing the known contracts, and (c) the library implementing the unknown contracts. The weighted distance based approach is a fast and very useful when a new rule generation is required for a language based unseen crypto API. The generation of the graph from the classes, the one or more interfaces, and the methods to create the one or more new rules based on existence of paths between the root nodes and the leaves. The patterns are extracted from standard documents and matching the patterns to extract relevant methods from the code base by the call graph traversal to identify potential candidates for new rules.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (700), comprising:

   receiving (702), via one or more hardware processors, an input program statement comprising an unseen crypto application programming interface (API);
   determining (704), via the one or more hardware processors, whether the input program statement represents a method invocation;
   mapping (706), via the one or more hardware processors, the invoked method by the input program statement with a rules database (112A) to infer at least one rule for an unseen crypto application programming interface (API) belonging to at least one of (a) a same library, (b) a library implementing known contracts, and (c) a library implementing unknown contracts; and
   generating (708), via the one or more hardware processors, at least one new rule for the unseen crypto application programming interface (API) belonging to at least one of: (a) the same library by a weighted distance approach, (b) the library implementing known contracts by a graph traversal approach, and (c) the library implementing unknown contracts by a pattern matching approach respectively.

2. The processor implemented method (700) as claimed in claim 1, wherein at least one new rule is generated, if the invoked method is not present in the rules database (112A), but belongs to a same class as one of the rules, by:

   (a) fetching (708I-a), via the one or more hardware processors, a class to which the method belongs, by using a weighted distance component;
   (b) computing (708I-b), via the one or more hardware processors, a distance between the crypto application programming interface (API) and the rules database (112A), and wherein the distance is computed with respect to (i) a name of the method, (ii) one or more associated arguments count, (iii) a type of argument, and (iv) an order of the arguments associated with rules;
   (c) computing (708I-c), via the one or more hardware processors, a final score by weighing each computed distance as per weightage assigned, and wherein the final score is applied with a predefined threshold value to filter matching at least one rule; and
   (d) generating (708I-d), via the one or more hardware processors, at least one new rule for the input API along with severity based on a least distance.

3. The processor implemented method (700) as claimed in claim 1, wherein at least one new rule is generated, if the invoked method that is not present in the rules database (112A), and belongs to a class other than one of the rules in the rules database (112A), but the invoked method is part of a known interface or contract, by:

   (a) constructing (708II-a), via the one or more hardware processors, a graph comprising one or more nodes representing (i) one or more abstract classes, (ii) one or more interfaces, and (iii) one or more methods, wherein the one or more nodes includes one or more root nodes, one or more leaves of the graph, and wherein one or more leaves of the graph represents one or more public methods which are exposed to a host application; and
   (b) generating (708II-b), via the one or more hardware processors, at least one new rule based on a directed path being identified from a root node to a leaf representing a public method.

4. The processor implemented method (700) as claimed in claim 3, wherein the one or more root nodes of the graph are at least one of: (i) the one or more interfaces, or (ii) one or more abstract classes which do not extend other class, wherein all non-root nodes except leaf nodes of the graph are at least one of (a) one or more concrete classes, (b) one or more classes which extend other classes, and (c) one or more classes which implement the one or more interfaces.

5. The processor implemented method (700) as claimed in claim 1, wherein at least one new rule is generated based on one or more patterns of an implementation, if the invoked method is not present in the rules database (112A), and if the invoked method belongs to a class other than one of the rules database (112A), and the invoked method is not part of the known interface or the contract, by:

(a) extracting (708III-a), via the one or more hardware processors, the one or more patterns of implementation from a textual document which specifies the method;
(b) mapping (708III-b), via the one or more hardware processors, the one or more extracted patterns with a codebase to identify methods implementing the one or more extracted patterns;
(c) performing (708III-c), via the one or more hardware processors, a bottom up traversal in a call graph of an application or library from the one or more extracted patterns implementing methods to determine a common method which is exposed to the host application implementing all patterns related to a crypto primitive; and
(d) marking (708III-d), via the one or more hardware processors, the common method to generate at least one new rule.

6. A system (100) comprising:

a memory (104) storing a plurality of instructions;
one or more communication interfaces (106); and
one or more hardware processors (102) coupled to the memory (104) via the one or more communication interfaces (106), wherein the one or more hardware processors (102) are configured by the instructions to:

receive an input program statement comprising an unseen crypto application programming interface (API);
determine whether the input program statement represents a method invocation;
map the invoked method by the input program statement with a rules database (112A) to infer at least one rule for an unseen crypto application programming interface (API) belonging to at least one of (a) a same library, (b) a library implementing known contracts, and (c) a library implementing unknown contracts; and
generate at least one new rule for the unseen crypto application programming interface (API) belonging to at least one of: (a) the same library by a weighted distance approach, (b) the library implementing known contracts by a graph traversal approach, and (c) the library implementing unknown contracts by a pattern matching approach respectively.

7. The system (100) as claimed in claim 6, wherein the one or more hardware processors (102) are configured by the instructions to generate at least one new rule, if the invoked method is not present in the rules database (112A), but belongs to a same class as one of the rules, by:

(a) fetching, a class to which the method belongs, by using a weighted distance component;
(b) computing a distance between the crypto application programming interface (API) and the rules database (112A), wherein the distance is computed with respect to (i) a name of the method, (ii) one or more associated arguments count, (iii) a type of argument, and (iv) an order of the arguments associated with rules;
(c) computing a final score by weighing each computed distance as per weightage assigned, wherein the final score is applied with a predefined threshold value to filter matching at least one rule; and
(d) generating at least one new rule for the input API along with severity based on a least distance.

8. The system (100) as claimed in claim 6, wherein the one or more hardware processors (102) are configured by the instructions to generate at least one new rule, if the invoked method that is not present in the rules database (112A), and belongs to a class other than one of the rules in the rules database (112A), but the invoked method is part of a known interface or contract, by:

(a) constructing a graph comprising one or more nodes representing (i) one or more abstract classes, (ii) one or more interfaces, and (iii) one or more methods, wherein the one or more nodes includes one or more root nodes, one or more leaves of the graph, and wherein one or more leaves of the graph represents one or more public methods which are exposed to a host application; and
(b) generating at least one new rule based on a directed path being identified from a root node to a leaf representing a public method.

9. The system (100) as claimed in claim 8, wherein the one or more root nodes of the graph are at least one of: (i) the one or more interfaces, or (ii) one or more abstract classes which do not extend other class, and wherein all non-root nodes except leaf nodes of the graph are at least one of (a) one or more concrete classes, (b) one or more classes which extend other classes, and (c) one or more classes which implement the one or more interfaces.

10. The system (100) as claimed in claim 6, wherein the one or more hardware processors (102) are configured by the instructions to generate at least one new rule based on one or more patterns of an implementation, if the invoked method is not present in the rules database (112A), and if the invoked method belongs to a class other than one of the rules database (112A), and the invoked method is not part of the known interface or the contract, by:

(a) extracting the one or more patterns of implementation from a textual document which specifies the method;
(b) mapping the one or more extracted patterns with a codebase to identify methods implementing the one or more extracted patterns;
(c) performing a bottom up traversal in a call graph of an application or library from the one or more extracted patterns implementing methods to determine a common method which is exposed to the host application implementing all patterns related to a crypto primitive; and
(d) marking the common method to generate at least one new rule.

11. One or more non-transitory machine-readable information storage mediums comprising one or more instructions which when executed by one or more hardware processors cause:

receiving an input program statement comprising an unseen crypto application programming interface (API);
determining whether the input program statement represents a method invocation;
mapping the invoked method by the input program statement with a rules database to infer at least one rule for an unseen crypto application programming interface (API) belonging to at least one of (a) a same library, (b) a library implementing known contracts, and (c) a library implementing unknown contracts; and
generating at least one new rule for the unseen crypto application programming interface (API) belonging to at least one of: (a) the same library by a weighted distance approach, (b) the library implementing known contracts by a graph traversal approach, and (c) the library implementing unknown contracts by a pattern matching approach respectively.

12. The one or more non-transitory machine-readable information as claimed in claim 11, wherein at least one new rule is generated, if the invoked method is not present in the rules database, but belongs to a same class as one of the rules, by:

(e) fetching a class to which the method belongs, by using a weighted distance component;
(f) computing a distance between the crypto application programming interface (API) and the rules database, and wherein the distance is computed with respect to (i) a name of the method, (ii) one or more associated arguments count, (iii) a type of argument, and (iv) an order of the arguments associated with rules;
(g) computing a final score by weighing each computed distance as per weightage assigned, and wherein the final score is applied with a predefined threshold value to filter matching at least one rule; and
(h) generating at least one new rule for the input API along with severity based on a least distance.

13. The one or more non-transitory machine-readable information as claimed in claim 11, wherein at least one new rule is generated, if the invoked method that is not present in the rules database, and belongs to a class other than one of the rules in the rules database, but the invoked method is part of a known interface or contract, by:

(a) constructing a graph comprising one or more nodes representing (i) one or more abstract classes, (ii) one or more interfaces, and (iii) one or more methods, wherein the one or more nodes includes one or more root nodes, one or more leaves of the graph, and wherein one or more leaves of the graph represents one or more public methods which are exposed to a host application; and
(b) generating at least one new rule based on a directed path being identified from a root node to a leaf representing a public method.

14. The one or more non-transitory machine-readable information as claimed in claim 11, wherein the one or more root nodes of the graph are at least one of: (i) the one or more interfaces, or (ii) one or more abstract classes which do not extend other class, wherein all non-root nodes except leaf nodes of the graph are at least one of (a) one or more concrete classes, (b) one or more classes which extend other classes, and (c) one or more classes which implement the one or more interfaces.

15. The one or more non-transitory machine-readable information as claimed in claim 11, wherein at least one new rule is generated based on one or more patterns of an implementation, if the invoked method is not present in the rules database , and if the invoked method belongs to a class other than one of the rules database, and the invoked method is not part of the known interface or the contract, by:

> (a) extracting the one or more patterns of implementation from a textual document which specifies the method;
> (b) mapping the one or more extracted patterns with a codebase to identify methods implementing the one or more extracted patterns;
> (c) performing a bottom up traversal in a call graph of an application or library from the one or more extracted patterns implementing methods to determine a common method which is exposed to the host application implementing all patterns related to a crypto primitive; and
> (d) marking the common method to generate at least one new rule.

**FIG. 1**

FIG. 2

END

END

Yes

No

| ProgramS<br>tatement.t<br>ype =<br>Method | Yes → | Rule<br>match<br>? | No → | Fetch<br>class of<br>the<br>method | → | Class<br>match<br>? |

Yes

| Compute edit<br>distance with<br>name of all<br>rules (APIs) of<br>same class | → | Compute edit<br>distance with<br>arguments of<br>rules (APIs) | → | Extract the top<br>scoring<br>(minimum<br>distance)<br>matching rule |

Create a new rule
for the method
and inherit the
severity from the
matching rule

**FIG. 3A**

Digest(byte[])  —YES→  Rule match?  —NO→  MessageDigest

Class match?

YES

Edit Dist - Rule 4

Edit Dist - Rule 5

min(Rule 4, Rule 5) = (4.2, 0.3)

Generate a new rule for digest (byte []) and inherit severity from the rule 5 (High)

**FIG. 3B**

**FIG. 4**

Extract relevant patterns from RFC for a given crypto operation → Match the extracted patterns against a codebase → Mark functions implementing patterns in the codebase

Perform bottom up traversal from matched functions in a call graph → Mark public methods and generate rules during the traversal

**FIG. 5**

MD5 patterns – RFC 1321

F (X, Y, Z) = XY v not (X) Z

G (X, Y, Z) = XZ v Y not (Z)

H (X, Y, Z) = X xor Y xor Z

I (X, Y, Z) = Y xor (X v not (Z))

{"binary_bitwise_and",

"unary_casting_int",

"binary_bitwise_xor",

"binary_bitwise_or}"

MD5 FF function in JDK Library

private static int FF (int a, int b, int c, int d, int x, int s, int ac)
{a+= ((b & c) | ((~b) & d)) + x + ac;

return ((a << s) | (a >>> (32-s))) + b;}

Generate rules for
public methods

Java.security.M
essageDigest:
void
update(byte[])

**FIG. 6**

receiving, via one or more hardware processors, an input program statement comprising an unseen crypto application programming interface (API) 702

determining, via the one or more hardware processors, whether the input program statement represents a method invocation 704

mapping, via the one or more hardware processors, the invoked method by the input program statement with a rules database to infer a plurality of rules for an unseen crypto application programming interface (API) belonging to at least one of (a) a same library, (b) a library implementing known contracts, and (c) a library implementing unknown contract 706

generating, via the one or more hardware processors, at least one new rule for the unseen crypto application programming interface (API) belonging to at least one of scenarios: (a) the same library by a weighted distance approach, (b) the library implementing known contracts by a graph traversal approach, and (c) the library implementing unknown contracts by a pattern matching approach respectively 708

700

**FIG. 7**

Europäisches
Patentamt

European
Patent Office

Office européen
des brevets

# EUROPEAN SEARCH REPORT

**Application Number**

EP 24 22 3349

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | STEFAN KR\"UGER ET AL: "CrySL: Validating Correct Usage of Cryptographic APIs", ARXIV.ORG, CORNELL UNIVERSITY LIBRARY, 201 OLIN LIBRARY CORNELL UNIVERSITY ITHACA, NY 14853, 2 October 2017 (2017-10-02), XP080825283, * abstract * * page 1, right-hand column, paragraph 3 - page 2, left-hand column, paragraph 3 * * page 2; figures 1-3 * * page 3; figure 4 * * page 4; figures 5-6 * * page 6; figures 9-10 * ----- | 1-15 | INV. G06F8/70 G06F8/76 |

TECHNICAL FIELDS
SEARCHED      (IPC)

G06F

The present search report has been drawn up for all claims

| Place of search | Date of completion of the search | Examiner |
|---|---|---|
| Munich | 6 May 2025 | Milasinovic, Goran |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421000057